# EUROPEAN PATENT APPLICATION

(11) **EP 4 451 491 A1**
(43) Date of publication of application: **23.10.2024**
(21) Application number: 22905790.6
(22) Date of filing: 31.05.2022
(51) Int. Cl.: H02B 1/26

(54) **PRESSURE RELIEF DEVICE AND ELECTRICAL EQUIPMENT**

(30) Priority: 17.12.2021 CN 202111556505
(71) Applicant: Sungrow Power Supply Co., Ltd., Hefei, Anhui 230088 (CN)
(72) Inventor: LIU, Long, Hefei, Anhui 230088 (CN); CAI, Qu'e, Hefei, Anhui 230088 (CN); REN, Xiangyang, Hefei, Anhui 230088 (CN); LI, Yonghong, Hefei, Anhui 230088 (CN)
(74) Representative: Zacco Norway AS
(86) International application number: PCT/CN2022/096156
(87) International publication number: WO 2023/109022

(57) **Abstract**

Disclosed in the present invention are a pressure relief device and electrical equipment. The pressure relief device comprises a first housing and a second housing which are mutually covered and arranged, and fasteners used for connecting the first housing and the second housing; a mounting via hole is formed in the first housing; a connecting hole corresponding to the mounting via hole is formed in the second housing. A fastening assembly connects the mounting via hole and the connecting hole. First locking structures and second locking structures spaced apart from each other are matched and formed between the fastening assembly and the first housing; in an initial state, the first locking structures stop the first housing in a direction away from the second housing, and under impact of external force, the first locking structures are damaged, and the second locking structures stop the first housing in a direction away from the second housing. The technical solution of the present invention can reduce the possibility that the assemblies of the pressure relief device are exploded due to explosion, and guarantee the safety of peripheral equipment and personnel.

## Description

The present application claims the priority to Chinese Patent Application No. 202111556505.2, titled "PRESSURE RELIEF DEVICE AND ELECTRICAL EQUIPMENT", filed with the China National Intellectual Property Administration on Dec. 17, 2021, the entire disclosure of which is incorporated herein by reference.

### FIELD

The present application relates to the technical field of electrical equipment, and in particular to a pressure relief device and electrical equipment employing the pressure relief device.

### BACKGROUND

At present, some electrical equipment and devices with a high requirement for environment, such as an inverter, a converter, a power supply apparatus or the like, are required to be mounted inside an enclosure to prevent dust and moisture. These kinds of electrical equipment usually has devices such as a capacitor, a switch, a relay or the like inside, and has a risk of explosion if a short-circuit fault occurs in the equipment. When the explosion occurs, structure assemblies of a pressure relief device such as a cover body and/or a bolt are likely to be blasted away due to the explosive impact, which may cause personal injury and has safety hazards.

### SUMMARY

A primary object of the present application is to provide a pressure relief device, to reduce the possibility of assemblies of the pressure relief device being blasted away due to explosion, to guarantee the safety of equipment and people around.

In order to achieve the above object, a pressure relief device is provided according to the present application, including:
a first housing and a second housing being connected to each other in an enclosing manner, where the first housing is provided with a through mounting hole, and the second housing is provided with a connection hole corresponding to the through mounting hole; and
a fastening assembly, which is configured to connect the through mounting hole and the connection hole to fix the first housing with the second housing, where a first locking structure and a second locking structure spaced apart from each other are formed by cooperation between the fastening assembly and the first housing; and where
in an initial state, the first locking structure is configured to prevent the first housing from moving in a direction away from the second housing; and under an impact of an external force, the first locking structure is damaged, and the second locking structure is configured to stop the first housing from moving in the direction away from the second housing.

In an embodiment, the first locking structure includes a support portion provided at the through mounting hole and a stop portion provided at the fastening assembly; and in the initial state, the stop portion abuts against the support portion, and under the impact of the external force, the support portion is damaged by the stop portion.

In an embodiment, the fastening assembly includes a locking member, the locking member includes a first connecting segment and a second connecting segment, the stop portion and the second locking structure are formed on the first connecting segment, and the second connecting segment passes through the through mounting hole to be in fixed connection with the connection hole.

In an embodiment, the stop portion is a step surface formed on the first connecting segment, and the support portion is formed at an inner side of the through mounting hole and extends toward an interior of the through mounting hole, where in the initial state, the step surface abuts against the support portion.

In an embodiment, a thickness of the support portion is less than a depth of the through mounting hole, and/or the support portion is provided with at least one notch extending along a radial direction of the through mounting hole.

In an embodiment, a screw portion is formed at the second connecting segment, the connection hole is embodied as a threaded hole, and the screw portion is in threaded connection with the connection hole.

In an embodiment, a screw portion is formed at the second connecting segment, and the screw portion is arranged through the connection hole, where a portion of the screw portion passed through the connection hole is in threaded connection with a locking nut, and the locking nut abuts against a side of the second housing away from the first housing.

In an embodiment, the fastening assembly includes a first fastener and a second fastener, where the first fastener is arranged at a side of the first housing away from the second housing, the first fastener is provided with the stop portion and the second locking structure, and the second fastener passes through the connection hole to be in fixed connection with the first fastener.

In an embodiment, the first locking structure is a limit member arranged on the fastening assembly; in the initial state, the limit member abuts against a rim of the through mounting hole, and under the impact of the external force, the limit member is damaged by the through mounting hole.

In an embodiment, the limit member is a retaining ring, the fastening assembly is provided with an annular mounting groove, and the retaining ring is mounted in the annular mounting groove.

In an embodiment, a screw portion is formed on the fastening assembly, the connection hole is embodied as a threaded hole, and the screw portion is in threaded connection with the connection hole.

In an embodiment, an outer diameter of the second locking structure is larger than a diameter of the through mounting hole.

In an embodiment, the number of the fastening assembly is plural, and the multiple fastening assemblies are arranged on the pressure relief device in a spaced manner.

Electrical equipment is further provided according to the present application. The electrical equipment includes a pressure relief device, where the pressure relief device includes a first housing and a second housing being connected to each other in an enclosing manner, and a fastening assembly connecting the first housing and the second housing; the first housing is provided with a through mounting hole, and the second housing is provided with a connection hole corresponding to the through mounting hole. The through mounting hole and the connection hole are connected by the fastening assembly, where a first locking structure and a second locking structure spaced apart from each other are formed by cooperation between the fastening assembly and the first housing; in an initial state, the first locking structure is configured to prevent the first housing from moving in a direction away from the second housing, and under an impact of an external force, the first locking structure is damaged, and the second locking structure stops the first housing from moving in the direction away from the second housing.

According to the solutions of the present application, the first housing and the second housing are connected to each other in an enclosing manner, the first housing is provided with the through mounting hole, and the second housing is provided with the connection hole corresponding to the through mounting hole. The fastening assembly connects the first housing and the second housing through the through mounting hole and the connection hole. The first locking structure and the second locking structure are formed by cooperation between the fastening assembly and the first housing. In the initial state, the first locking structure is located between the fastening assembly and the through mounting hole, and prevents the first housing from moving in the direction away from the second housing, to fasten the first housing and the second housing. Under the impact of the external force, due to the impact force, the first housing moves away from the second housing, and the first locking structure is damaged. At this time, the second locking structure stops the first housing to reduce the possibility of the first housing being separated from the second housing, which reduces the possibility that the first housing, the second housing, the fastening assembly and the electrical assemblies mounted in the first housing and the second housing are blasted away because of the impact to cause personal injury, so as to guarantee the safety of equipment and people around, and thus the safety hazards are eliminated.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a perspective schematic view showing the structure of a pressure relief device according to an embodiment of the present application;
FIG. 2 is a schematic view showing the assembly of a fastening assembly of the pressure relief device in FIG. 1 in an initial state;
FIG. 3 is a schematic view showing the assembly of the fastening assembly of the pressure relief device in FIG. 1 under an impact;
FIG. 4 is a perspective schematic view showing the structure of a support portion of the pressure relief device in FIG. 1;
FIG. 5 is a schematic view showing the assembly of a fastening assembly of a pressure relief device in an initial state according to another embodiment of the present application;
FIG. 6 is a schematic view showing the assembly of the fastening assembly of the pressure relief device in FIG. 5 under an impact;
FIG. 7 is a schematic view showing the assembly of a fastening assembly of a pressure relief device in an initial state according to yet another embodiment of the present application;
FIG. 8 is a schematic view showing the assembly of the fastening assembly of the pressure relief device in FIG. 7 under an impact;
FIG. 9 is a schematic view showing the assembly of a fastening assembly of a pressure relief device in an initial state according to still another embodiment of the present application; and
FIG. 10 is a schematic view showing the assembly of the fastening assembly of the pressure relief device in FIG. 9 under an impact.

**Reference numerals:**

| | | | |
|---|---|---|---|
| 100 | pressure relief device, | 110 | first housing, |
| 111 | through mounting hole, | 120 | second housing, |
| 130 | first locking structure, | 131 | support portion, |
| 132 | stop portion, | 133 | notch, |
| 134 | limit member, | 135 | retaining ring, |
| 140 | second locking structure, | 150 | locking member, |
| 151 | first connecting segment, | 152 | second connecting segment, |
| 153 | screw portion, | 154 | locking nut, |
| 155 | annular mounting groove, | 160 | first fastener, |
| 170 | second fastener. | | |

The realization of the purpose of the present application, functional characteristics and advantages will be further described in conjunction with the embodiments and with reference to the accompanying drawings.

### DETAILED DESCRIPTION OF THE EMBODIMENTS

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

It should be noted that, all of the directional indications (such as up, down, left, right, front, back...) in the embodiments of the present application are merely for relative positional relationship, movements, etc. of the assemblies in a certain posture (as shown in the accompany drawings). If the certain posture changes, the directional indication will also change correspondingly.

In addition, terms such as "first", "second" and the like in the present application are merely for description, and should not be construed as indicating or implying relative importance, or implicitly indicating the number of the technical features. Therefore, the features defined as "first" and "second" may explicitly or implicitly include at least one of these features. In addition, the technical solutions of various embodiments can be combined with each other, but it must be based on the realization of those skilled in the art. When the combination of technical solutions is contradictory or cannot be realized, it should be regarded as not existing, nor within the scope of protection required by the present application.

A pressure relief device 100 is provided in the present application, to provide protection for electrical equipment with a high requirement for environment, such as an inverter, a converter, a power supply apparatus or the like.

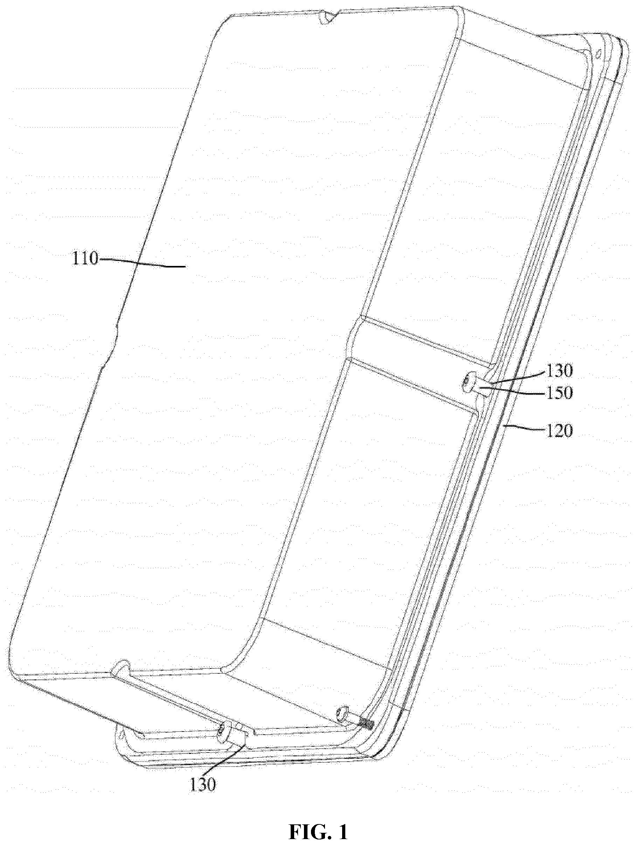

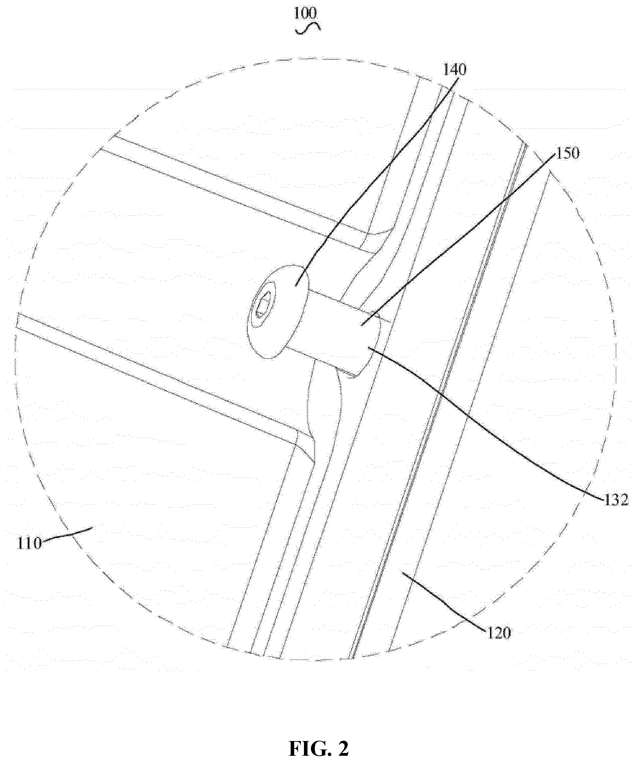

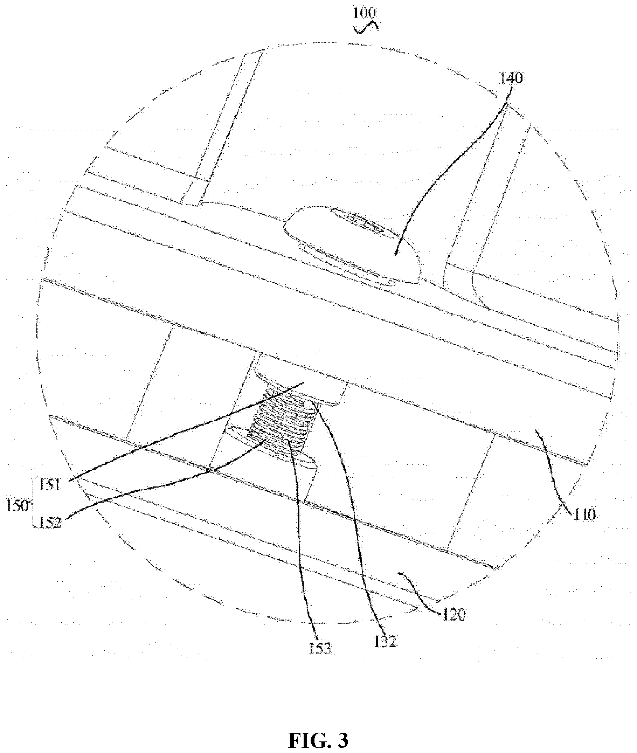

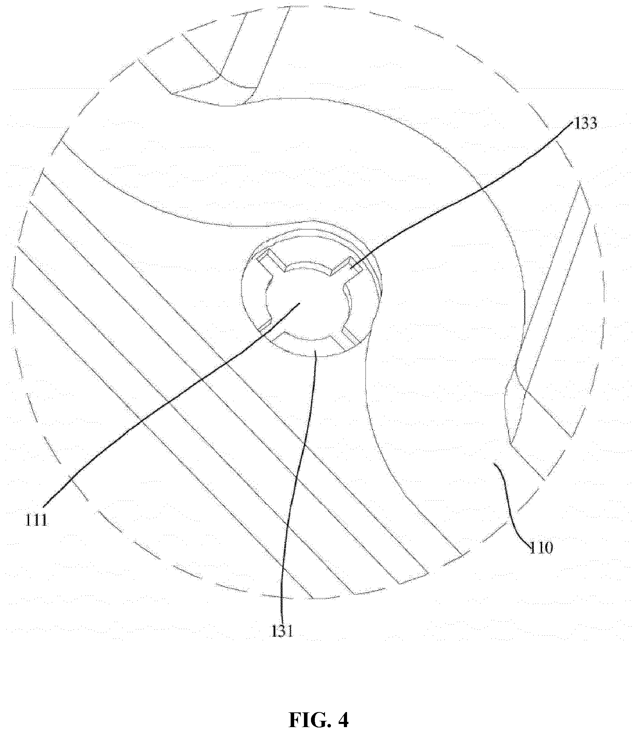

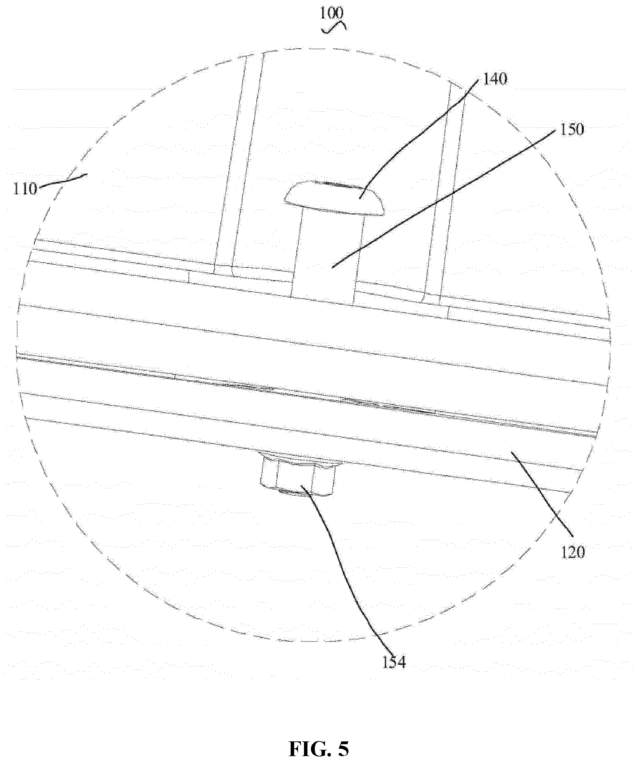

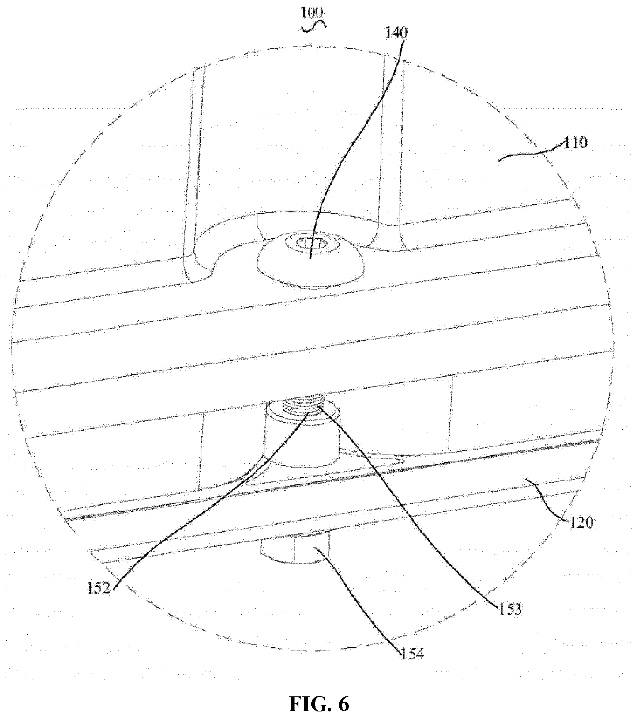

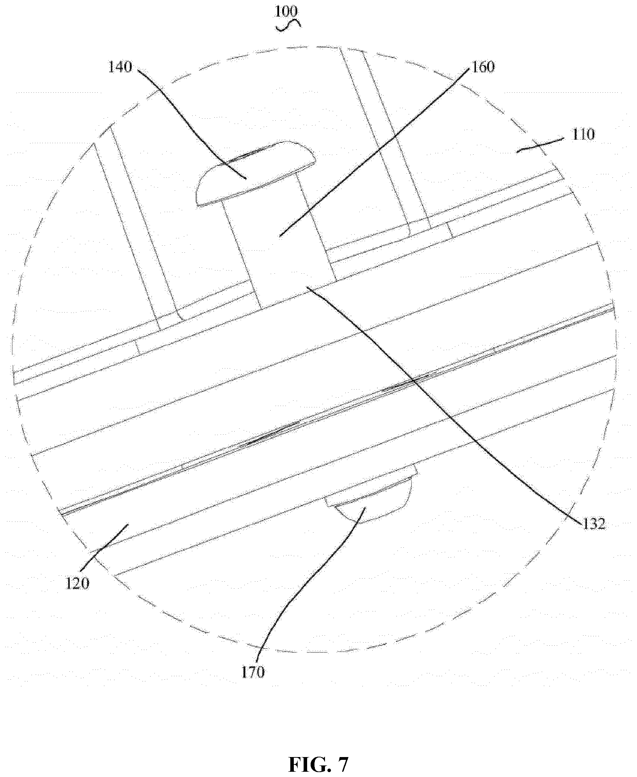

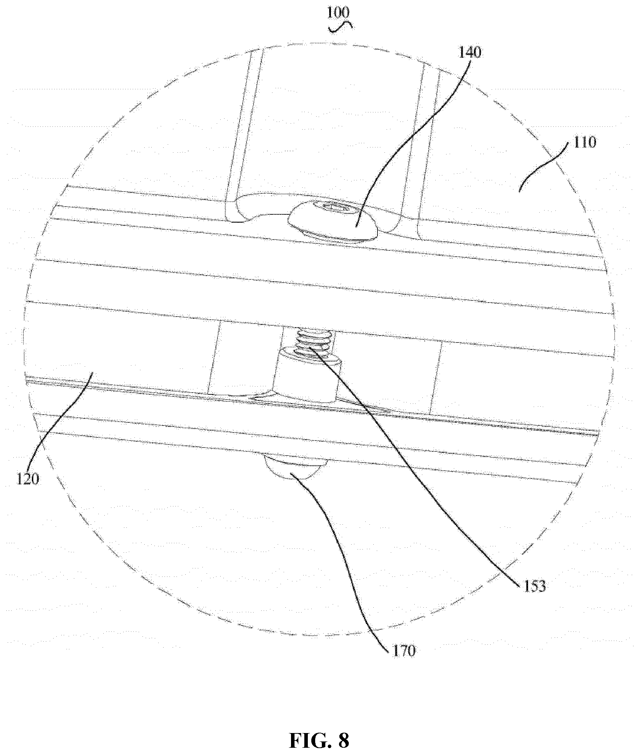

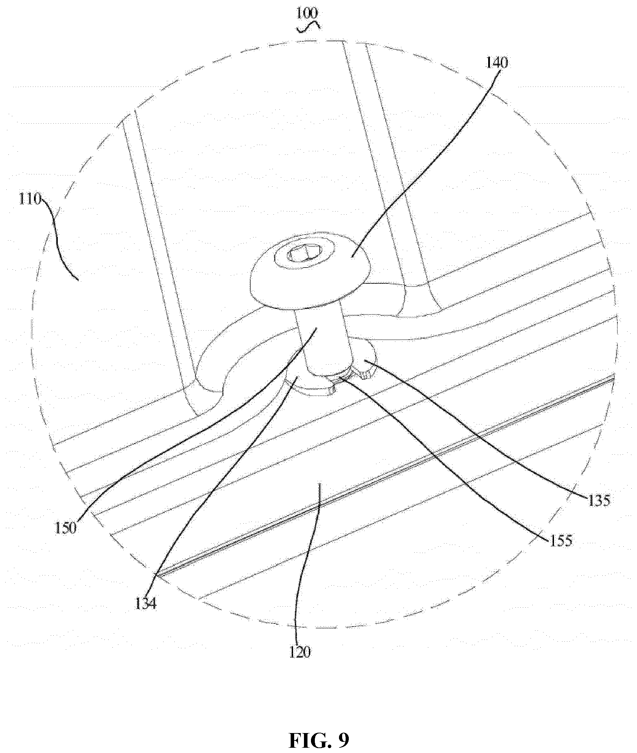

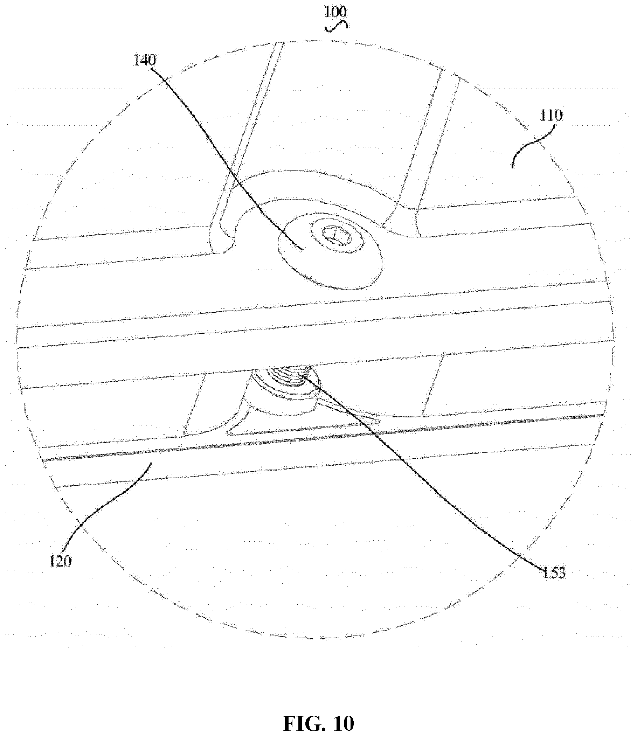

In the embodiments of the present application, as shown in FIGS. 1 to 10, the pressure relief device 100 includes a first housing 110 and a second housing 120 being connected to each other in an enclosing manner, and a fastening assembly connecting the first housing 110 and the second housing 120. The first housing 110 is provided with a through mounting hole 111, and the second housing 120 is provided with a connection hole corresponding to the through mounting hole 111. The fastening assembly connects the through mounting hole 111 and the connection hole, where a first locking structure 130 and a second locking structure 140 spaced apart from each other are formed by cooperation between the fastening assembly and the first housing 110. In an initial state, the first locking structure 130 prevents the first housing 110 from moving in a direction away from the second housing 120. Under an impact of an external force, the first locking structure 130 is damaged, and the second locking structure 140 stops the first housing 110 from moving in the direction away from the second housing 120.

The fastening assembly connects the first housing 110 and the second housing 120 by connecting the through mounting hole 111 and the connection hole. The first locking structure 130 and the second locking structure 140 spaced apart from each other are formed by cooperation between the fastening assembly and the first housing 110. In the initial state, the first locking structure 130 is located between the fastening assembly and the through mounting hole 111, and prevents the first housing 110 from moving in the direction away from the second housing 120, so as to fasten the first housing 110 with the second housing 120. Under the impact of an external force, due to the impact force, the first housing 110 moves away from the second housing 120, and the first locking structure 130 is damaged. At this time, the second locking structure 140 stops the first housing 110, to reduce the possibility of the first housing 110 being separated from the second housing 120.

In an embodiment, an outer diameter of the second locking structure 140 is larger than a diameter of the through mounting hole 111. Since the diameter of the second locking structure 140 is larger than that of the through mounting hole 111, the second fastening assembly abuts against a rim of the through mounting hole 111. Therefore, the through mounting hole 111 can hardly get out of the fastening assembly, such that the second locking structure 140 stops the through mounting hole 111.

In an embodiment, the second housing 120 and the first housing 110 are each provided with an avoidance groove, to facilitate dismounting and mounting of the fastening assembly. By providing the avoidance groove on the first housing 110, where the avoidance groove extends along a direction away from an axis of the through mounting hole 111, so that mounting and dismounting of the fastening assembly become easier for a user.

In the solutions of the present application, the first housing 110 and the second housing 120 are connected to each other in an enclosing manner, where the first housing 110 is provided with the through mounting hole 111, and the second housing 120 is provided with the connection hole corresponding to the through mounting hole 111. The fastening assembly connects the first housing 110 and the second housing 120 through the through mounting hole 111 and the connection hole. The first locking structure 130 and the second locking structure 140 spaced apart from each other are formed by cooperation between the fastening assembly and the first housing 110. In the initial state, the first locking structure 130 is located between the fastening assembly and the through mounting hole 111, and prevents the first housing 110 from moving in the direction away from the second housing 120, thereby fastening the first housing 110 with the second housing 120. Under the impact of an external force, due to the impact force, the first housing 110 moves away from the second housing 120, and the first locking structure 130 is damaged; at this time, the second locking structure 140 stops the first housing 110, to reduce the possibility of the first housing 110 being separated from the second housing 120, which reduces the possibility that the first housing 110, the second housing 120, the fastening assembly and the electrical assemblies mounted in the first housing 110 and the second housing 120 are blasted away due to the impact to cause personal injury, so as to guarantee the safety of equipment and people around, and thus the safety hazards are eliminated.

Please refer to FIGS. 1 to 4 in conjunction, in an embodiment, the first locking structure 130 includes a support portion 131 provided at the through mounting hole 111 and a stop portion 132 provided on the fastening assembly. In the initial state, the stop portion 132 abuts against the support portion 131, and under the impact of the external force, the support portion 131 is damaged by the stop portion 132. Specifically, since the support portion 131 is connected to an inner wall of the through mounting hole 111, and the stop portion 132 is provided on the fastening assembly, the support portion 131 is able to prevent the fastening assembly from moving in a direction toward the second housing 120, where the fastening assembly passes through an inner side of the support portion 131 and is connected to the connection hole. Under the impact of the external force, the second housing 120 moves outwards with respect to the first housing 110, such that an impact occurs between the stop portion 132 and the support portion 131, and the support portion 131 is damaged by the stop portion 132 due to the impact, leading to the failure of the first locking structure 130.

In this embodiment, the support portion 131 is integrally formed with the first housing 110, which not only reduces the mounting process of the support portion 131 and the first housing 110, but also decreases the possibility of the support portion 131 being separated from the first housing 110, thereby improving the structural stability of the first housing 110. Certainly, in other embodiments, the support portion 131 may be connected to the first housing 110 by bonding or clamping. In this embodiment, the stop portion 132 is integrally formed with the fastening assembly, which not only reduces the mounting process of the stop portion 132 and the fastening assembly, but also decreases the possibility of the stop portion 132 being separated from the fastening assembly, thereby improving the structural stability of the fastening assembly. Certainly, in other embodiments, the stop portion 132 may be connected to the fastening assembly by bonding or clamping.

In the solution that the support portion 131 is provided in the through mounting hole 111, in order to ensure that the support portion 131 can fall off smoothly under the impact force, in an embodiment, a thickness of the support portion 131 is less than a depth of the through mounting hole 111. The support portion 131 is arranged at an inner side of the through mounting hole 111 in an annular manner, and the stop portion 132 on the fastening assembly abuts against the support portion 131. Since the thickness of the support portion 131 is less than the depth of the through mounting hole 111, and the support portion 131 and the first housing 110 are made of the same material, a strength of the support portion 131 is lower than a strength of the first housing 110, such that when the pressure relief device 100 is under the impact force, the support portion 131 is easier to be separated from the through mounting hole 111. In other embodiments, the thickness of the support portion 131 may be equal to or larger than the depth of the through mounting hole 111, where the support portion 131 and the first housing 110 are made of different materials, and the strength of the support portion 131 is lower than the strength of the first housing 110.

In order to further ensure that the support portion 131 can fall off smoothly under the impact force, in another embodiment, the support portion 131 is provided with at least one notch 133, and the notch 133 extends along a radial direction of the through mounting hole 111. Specifically, the support portion 131 is provided with at least one notch 133, i.e. the support portion 131 may be provided with one notch 133 or multiple notches 133, and the notch 133 extends along the radial direction of the through mounting hole 111. That is, the support portion 131 may be provided with a recessed groove, or may be provided with a cross-shaped groove. The notch 133 can cause stress concentration at the notch 133 of the support portion 131, such that the support portion 131 is easier to be broken at the notch 133, which makes it easier for the support portion 131 to be separated from the through mounting hole 111.

In an embodiment, the fastening assembly includes a locking member 150, and the locking member 150 includes a first connecting segment 151 and a second connecting segment 152, where the first connecting segment 151 is provided with the stop portion 132 and the second locking structure 140, and the second connecting segment 152 passes through the through mounting hole 111 to be in fixed connection with the connection hole. Specifically, the locking member 150 is provided with the first connecting segment 151 and the second connecting segment 152, where the second locking structure 140 is provided at an end of the first connecting segment 151 away from the second connecting segment 152, and the second connecting segment 152 passes through the through mounting hole 111 to be in fixed connection with the connection hole. The first connecting segment 151 is further provided with the stop portion 132, and the stop portion 132 acts against the support portion 131 to form the first locking structure 130, so as to stop the first housing 110 in the direction away from the second housing 120.

Further, in an embodiment, the stop portion 132 is a step surface formed on the first connecting segment 151, and the support portion 131 is formed at the inner side of the through mounting hole 111 and extends toward an interior thereof. In the initial state, the step surface abuts against the support portion 131. Specifically, the stop portion 132 is the step surface formed on the first connecting segment 151, and specifically, a diameter of the first connecting segment 151 is larger than a diameter of the second connecting segment 152, such that the step surface is formed at a place where the first connecting segment 151 is in connection with the second connecting segment 152. The support portion 131 is formed at the inner side of the through mounting hole 111 and extends toward the interior thereof, and the first connecting segment 151 passes through the through mounting hole 111, such that in the initial state, the step surface abuts against the support portion 131, to prevent the first housing 110 from moving in the direction away from the second housing 120.

As for the connection manner between the locking member 150 and the second housing 120, in an embodiment, the second connecting segment 152 is provided with a screw portion 153, and the connection hole is embodied as a threaded hole, where the screw portion 153 is in threaded connection with the connection hole. Specifically, the screw portion 153 is formed on the second connecting segment 152, and the connection hole is embodied as the threaded hole, where the screw portion 153 is in threaded connection with the connection hole, such that the locking member 150 is fixed by threaded connection. This kind of connection manner is simple and easy for mounting. Certainly, in other embodiments, the locking member 150 may be fixed with the second housing 120 by bonding, clamping or interference fit.

In order to improve the connection strength between the locking member 150 and the second housing 120, in an embodiment, the second housing 120 is provided with a mounting protrusion, which extends toward the through mounting hole 111, the connection hole passes through the mounting protrusion, and the locking member 150 is connected to the second housing 120 through the mounting protrusion. Since the mounting protrusion extending toward the through mounting hole 111 is provided on the second housing 120, and the connection hole passes through the mounting protrusion and the second housing 120, the locking member 150 is connected to the second housing 120 through the mounting protrusion, and the locking member 150 is in threaded connection with the connection hole, which increases a contact area between the second housing 120 and the locking member 150, and further improves the connection strength between the locking member 150 and the second housing 120, such that when the pressure relief device 100 is under the impact force, the locking member 150 can hardly be blasted away from the pressure relief device 100. Moreover, in view of the connection strength between the second housing 120 and the mounting protrusion, the second housing 120 and the mounting protrusion are integrally formed. Certainly, in other embodiments, the second housing 120 and the mounting protrusion may be connected by bonding, clamping or interference fit.

As for the connection manner between the locking member 150 and the second housing 120, in another embodiment, referring to FIGS. 1, 4, 5 and 6, the second connecting segment 152 is provided with the screw portion 153, the screw portion 153 is arranged passing through the connection hole, and a part of the screw portion 153 passed through the connection hole is in threaded connection with a locking nut 154, where the locking nut 154 abuts against a side of the second housing 120 away from the first housing 110. Specifically, the second connecting segment 152 is provided with the screw portion 153, and the screw portion 153 passes through the connection hole to be in threaded connection with the locking nut 154. The locking nut 154 abuts against the side of the second housing 120 away from the first housing 110, thus the locking nut 154 is able to stop the locking member 150 from getting away from the second housing 120, to reduce the possibility of the first housing 110 and the second housing 120 being separated under the impact force.

Compared with the solution that the first locking structure 130 includes the locking member 150, in another embodiment, referring to FIGS. 1, 4, 7 and 8, the fastening assembly includes a first fastener 160 and a second fastener 170, where the first fastener 160 is arranged at a side of the first housing 110 away from the second housing 120, and the first fastener 160 is provided with the stop portion 132 and the second locking structure 140, and the second fastener 170 passes through the connection hole to be in fixed connection with the first locking structure 160. Specifically, the fastening assembly includes the first fastener 160 and the second fastener 170, where the first fastener 160 is arranged at the side of the first housing 110 away from the second housing 120, and the second fastener 170 passes through the connection hole and is in fixed connection with the first locking structure 160. The first fastener 160 is provided with the stop portion 132 and the second locking structure 140. The second locking structure 140 is provided at an end of the first fastener 160, and the other end of the first fastener 160 is provided with an inner threaded hole. The second fastener 170 is provided with the screw portion 153, and the screw portion 153 passes through the connection hole to be in threaded connection with the first fastener 160, such that a step surface is formed at a place where the screw portion 153 is in connection with the first fastener 160, to serve as a stopping surface which abuts against the support portion 131. A third locking structure is provided on an end of the second fastener 170 away from the screw portion 153, to stop the second locking structure 150 from being separated from the second housing 120, such that the first housing 110 and the second housing 120 are fastened.

Compared with the solution that the first locking structure 130 includes the support portion 131 provided in the through mounting hole 111 and the stop portion 132 provided on the fastening assembly, in another embodiment, referring to FIGS. 1, 9 and 10, the first locking structure 130 is embodied as a limit member 134 provided on the fastening assembly. In the initial sate, the limit member 134 abuts against a rim of the through mounting hole 111, and under the impact of the external force, the limit member 134 is damaged by the through mounting hole 111. Specifically, the limit member 134 is arranged on the fastening assembly, and the fastening assembly passes through the through mounting hole 111 and is connected to the connection hole, the limit member 134 abuts against the rim of the through mounting hole 111, such that the through mounting hole 111 stops the fastening assembly from moving in the direction toward the second housing 120 through the limit member 134. When under the impact of the external force, the limit member 134 is separated from the fastening assembly due to the impact force, thus the second housing 120 moves outwards, the fastening assembly passes through the through mounting hole 111, such that the second locking structure 140 abuts against the rim of the through mounting hole 111. Compared with the solution that the support portion 131 is provided in the through mounting hole 111, in this solution, only the processing of the fastening assembly is required, which makes the processing easier.

In the solution where the limit member 134 is provided on the fastening assembly, in an embodiment, the limit member 134 is embodied as a retaining ring 135, and an annular mounting groove 155 is provided on the fastening assembly, where the retaining ring 135 is arranged in the annular mounting groove 155. Specifically, the retaining ring 135 is fixed on the fastening assembly, and since the diameter of the through mounting hole 111 is less than an outer diameter of the retaining ring 135, the retaining ring 135 is able to stop the fastening assembly from moving in the direction toward the second housing 120. Further, the retaining ring 135 has an open end, such that when the pressure relief device 100 is under the impact force, the retaining ring 135 can smoothly fall off from the fastening assembly, which further allows the first locking structure 130 to abut against the rim of the through mounting hole 111. In order to facilitate the mounting of the retaining ring 135 and the clamping of the retaining ring 135 on the fastening assembly, the fastening assembly is provided with the annular mounting groove 155. The solution that the annular mounting groove 155 being provided on the fastening assembly facilitates the fixation of the retaining ring 135 with the fastening assembly. Moreover, compared with a solution that the retaining ring 135 and the fastening assembly are integrally formed, by the connection manner via the annular mounting groove 155, the retaining ring 135 is easier to be separated from the fastening assembly. Certainly, in other embodiments, the retaining ring 135 may be fixed to the fastening assembly by bonding or integrated formation.

In the solution where the limit member 134 is provided on the fastening assembly, in order to facilitate the connection between the fastening assembly and the second housing 120, in an embodiment, the screw portion 153 is formed on the fastening assembly, and the connection hole is embodied as the threaded hole, where the screw portion 153 is in threaded connection with the connection hole. Specifically, the screw portion 153 is formed at an end of the fastening assembly away from the second locking structure 140, and the screw portion 153 is in threaded connection with the connection hole, such that the fastening assembly is fixed by threaded connection. This connection manner is simple and easy for mounting. Certainly, in other embodiments, the fastening assembly may be fixed with the second housing 120 by bonding, clamping or interference fit.

In another embodiment, referring to FIGS. 1, 5, 9 and 10, the locking nut 154 may be arranged at a side of the second housing 120 away from the fastening assembly, and the screw portion 153 passes through the connection hole to be in threaded connection with the locking nut 154, so as to fasten the first housing 110 and the second housing 120.

In an embodiment, multiple fastening assemblies are mounted on the pressure relief device 100, where the multiple fastening assemblies are arranged spaced apart from each other. Specifically, the multiple fastening assemblies are mounted on the pressure relief device 100, and correspondingly, the first housing 110 and the second housing 120 are provided with multiple through mounting holes 111 and multiple connection holes respectively. For the first locking structures 130 on the fastening assemblies, all of which may employ the solution that the support portion 131 being arranged in the through mounting hole 111 and the stop portion 132 being arranged on the fastening assembly, or all of which may employ the solution that the limit member 134 being arranged on the fastening assembly, or both of the solutions may be employed at the same time. The connection manner between the fastening assembly and the second housing 120 may employ the manner that the fastening assembly being fixed with the connection hole directly, or the manner that the fastening assembly passing through the connection hole to be in threaded connection with the locking nut, or both of the manners may be employed. Or, the first housing 110 and the second housing 120 may be connected through fixed connection between two fasteners. When fastening assemblies are employed, the impact force can be distributed on multiple screws, to reduce the possibility of the fastening assembly, the first housing 110, the second housing 120 and electrical assemblies therein being separated from the pressure relief device 100 under the impact force.

Electrical equipment is further provided according to the present application. The electrical equipment includes the pressure relief device 100, where the specific structure of the pressure relief device 100 is referred to the above embodiments. Since this second subject may employ all of the solutions according to all of the above embodiments, therefore has at least all of the beneficial effects of the solutions in the above embodiments, which will not be described herein.

The embodiments described hereinabove are only preferred embodiments of the present application, and are not intended to limit the scope of the present application. Any equivalent structural modifications based on the description and the accompany drawings of the present application, or direct/indirect utilization in other relevant technical fields, are deemed to fall into the scope of the technical solution of the present application.

## Claims

1. A pressure relief device, comprising:
a first housing and a second housing being connected to each other in an enclosing manner, wherein the first housing is provided with a through mounting hole, and the second housing is provided with a connection hole corresponding to the through mounting hole; and
a fastening assembly, which is configured to connect the through mounting hole and the connection hole to fix the first housing with the second housing, wherein a first locking structure and a second locking structure spaced apart from each other are formed by cooperation between the fastening assembly and the first housing; and wherein
in an initial state, the first locking structure is configured to prevent the first housing from moving in a direction away from the second housing; and under an impact of an external force, the first locking structure is damaged, and the second locking structure is configured to stop the first housing from moving in the direction away from the second housing.

2. The pressure relief device according to claim 1, wherein
the first locking structure comprises a support portion provided at the through mounting hole and a stop portion provided at the fastening assembly; and
in the initial state, the stop portion abuts against the support portion; and under the impact of the external force, the support portion is damaged by the stop portion.

3. The pressure relief device according to claim 2, wherein the fastening assembly comprises a locking member, the locking member comprises a first connecting segment and a second connecting segment, the stop portion and the second locking structure are formed on the first connecting segment, and the second connecting segment passes through the through mounting hole to be in fixed connection with the connection hole.

4. The pressure relief device according to claim 3, wherein the stop portion is a step surface formed on the first connecting segment, and the support portion is formed at an inner side of the through mounting hole and extends toward an interior of the through mounting hole; wherein in the initial state, the step surface abuts against the support portion.

5. The pressure relief device according to claim 4, wherein
a thickness of the support portion is less than a depth of the through mounting hole; and/or
the support portion is provided with at least one notch extending along a radial direction of the through mounting hole.

6. The pressure relief device according to claim 4, wherein a screw portion is formed at the second connecting segment, the connection hole is embodied as a threaded hole, and the screw portion is in threaded connection with the connection hole.

7. The pressure relief device according to claim 4, wherein
a screw portion is formed at the second connecting segment, and the screw portion is arranged through the connection hole; and wherein
a portion of the screw portion passed through the connection hole is in threaded connection with a locking nut, and the locking nut abuts against a side of the second housing away from the first housing.

8. The pressure relief device according to claim 2, wherein the fastening assembly comprises a first fastener and a second fastener, the first fastener is arranged at a side of the first housing away from the second housing, the first fastener is provided with the stop portion and the second locking structure, and the second fastener passes through the connection hole to be in fixed connection with the first fastener.

9. The pressure relief device according to claim 1, wherein
the first locking structure is a limit member arranged on the fastening assembly; and in the initial state, the limit member abuts against a rim of the through mounting hole;
and under the impact of the external force, the limit member is damaged by the through mounting hole.

10. The pressure relief device according to claim 9, wherein the limit member is a retaining ring, the fastening assembly is provided with an annular mounting groove, and the retaining ring is mounted in the annular mounting groove.

11. The pressure relief device according to claim 9, wherein a screw portion is formed on the fastening assembly, the connection hole is embodied as a threaded hole, and the screw portion is in threaded connection with the connection hole.

12. The pressure relief device according to any one of claims 1 to 11, wherein an outer diameter of the second locking structure is larger than a diameter of the through mounting hole.

13. The pressure relief device according to claim 1, wherein the number of the fastening assembly is plural, and the plurality of fastening assemblies are arranged on the pressure relief device in a spaced manner.

14. Electrical equipment, comprising the pressure relief device according to any one of claims 1 to 13.
